# EUROPEAN PATENT SPECIFICATION

(11) **EP 0 628 593 B1**
(45) Date of publication and mention of the grant of the patent: **15.07.1998**
(21) Application number: 94303652.5
(22) Date of filing: 20.05.1994
(51) Int. Cl.: C08J 5/18, B29C 55/00, B32B 27/08, B65D 65/40, C08L 29/04, C08L 23/08

(54) **Blends of EVOH and terpolymers of ethylene, acrylic ester and maleic anhydride or glysidyl methaccrylate and products thereof**
Mischungen aus EVOH und Terpolymerisate von Athylen, Acrylsäureester und Maleinsäureanhydrid oder Glycidylmethacrylat und daraus hergestellte Produkte
Mélanges à base de EVOH et d'un terpolymère d'éthylène, d'ester acrylique et d'anhydride maléique ou de méthacrylate de glycidyle et produits en résultant

(30) Priority: 20.05.1993 US 65316
(43) Date of publication of application: 14.12.1994
(73) Proprietor: W.R. GRACE & CO.-CONN., New York New York 10036-7794 (US)
(72) Inventor: Bekele, Solomon, Taylors, SC 29687 (US)
(74) Representative: Bentham, Stephen

(56) References cited:
- EP-A- 0 177 762
- EP-A- 0 238 870
- EP-A- 0 251 770
- EP-A- 0 322 199
- EP-A- 0 470 486
- WO-A-93/02139
- DE-A- 3 233 693

## Description

### Field of the Invention

The present invention relates to the plasticization of ethylene vinyl alcohol, and in particular relates to a chlorine free heat shrinkable plastic film for which the predominant oxygen barrier layer is formed of ethylene vinyl alcohol and a plasticizing terpolymer.

### Background of the Invention

In the packaging and delivery of certain food products, such as cheese, pork, smoked and processed meats, and particularly fresh red meat, there exists the need to protect the meat for the period of time from when it is first butchered until it is used by the end consumer. In particular, because oxygen promotes micrcbial degradation in such meats, the most pertinent requirement for protecting fresh red meat is long term protection against oxygen.

One excellent material for preventing the passage of oxygen is thin, but multilayer sheet wrapping material or film in which the oxygen barrier is formed of one or more layers of polyvinylidene chloride, which is also referred to as "PVDC" or "saran". As its name implies, however, one of the key ingredients of PVDC is chlorine. There presently exist a number of reasons, including environmental considerations, that make the elimination of chlorine desirable in such sheet wrap materials.

Accordingly, other materials have been included in sheet wrap materials to provide the oxygen barrier. One material which has good oxygen barrier characteristics under certain conditions is ethylene vinyl alcohol, often abbreviated as "EVOH". EVOH, however, tends to lose its oxygen barrier properties when subjected to moisture. As would be expected, fresh red meats and similar food products contain high amounts of moisture which in turn tend to degrade the otherwise useful oxygen barrier properties of EVOH.

Another requirement of such a film is that it be physically strong. In this regard, certain olefin products such as polypropylene and polyethylene form sheet materials with excellent strength characteristics, but which tend to have relatively high oxygen transmission rates. Accordingly, multilayer plastic films often include polyolefin layers for strength in combination with layers of other materials that have better barrier characteristics.

As implied by the designation "heat shrinkable", another desirable property of the film is that it be compatible with heat shrinking processes that are often used in conjunction with such films. As is known to those familiar with heat shrinkable products and processes, the term "orientation" is used to refer to various deformation processes carried out on plastic film materials during their manufacture. The viscous and elastic properties of most thermoplastic polymers enable those polymers to recover from deformation or to otherwise "remember" both the nature of the orientation and the temperature at which the original orientation takes place. As a result, a plastic material that is oriented at a certain temperature (e.g. 93°C [200°F]), and then cooled to ambient or working temperatures will, if later reheated to temperatures approaching the deformation temperature (again 93°C [200°F]), similarly have a tendency to return to its pre-oriented state at that temperature. If the orientation is an expansion process, then the recovery will be a shrinking process. Thus, a further desirable property of an oxygen barrier packaging film is that it can be oriented at relatively moderate temperatures, and then subsequently shrunk at those moderate temperatures.

Stated differently, packagers prefer to carry out the heat shrink process at temperatures well below those at which red meat would start to cook. Thus, the lower the temperature at which a plastic can be oriented, the correspondingly lower temperature at which it can be heat shrunk. Additionally, the greater the degree to which a plastic film can be oriented, the greater--and usually more useful--the degree to which it will shrink. Therefore, the greater the ratio at which a particular film can be oriented, the better its heat shrink properties at all temperatures, and particularly at lower ones.

As further stated above, as a replacement for chlorinated materials such as PVDC, EVOH is another excellent oxygen barrier material at low relative humidities or other measures of moisture content. Similarly, it eliminates the use of chlorine. At higher moisture contents, however, the oxygen barrier properties of EVOH rapidly decrease. As a result, when EVOH is used as an oxygen barrier, it must be part of a composite structure that otherwise prevents moisture from interfering with the oxygen barrier properties of the EVOH.

Furthermore, as previously noted, heat shrinkable properties are desirable in plastic film of this type, and the degree to which a film can be heat shrunk is a function of the extent to which it can be originally deformed (at a given temperature) while maintaining its integrity. Conventionally, the orientability of EVOH composite films has never exceeded a factor of about 8 to 1, usually expressed as 8 x 1, when oriented at or below 100°C (212°F). As known to those familiar with the manufacture of such films, the orientation ratio is the multiplication product of the extent to which the plastic film material is expanded in several directions, usually two directions perpendicular to one another. These directions are frequently referred to as the machine direction ("MD") which is the direction in which the extruded material is formed, and the transverse direction ("TD") which is the direction transverse or perpendicular to the machine direction. The degree of orientation is also referred to as the orientation ratio, or sometimes as the "racking ratio".

Additionally, in comparison to the usual structural components of a multilayer film, EVOH often has the highest glass transition temperature (T_{g}). As is known to those familiar with polymer materials, a higher T_{g} makes a polymer less subject to orientation. As a result, when EVOH is included in a multilayer film, it is often the least plastic, least orientable of the components and thus the limiting factor in the amount to which the overall film can be oriented.

EP-A-0,238,870 and EP-A-0,177,782 disclose blends comprising ethylene vinyl alcohol and a copolymer of ethylene acrylate or methacrylate graft-modified with unsaturated carboxylic acid or acid anhydride. Such blends are disclosed as useful in molded articles and containers and in polymer films. DE-A-3,233,693 discloses a heat shrinkable film containing a mixture of at least 40% of an ethylene vinyl alcohol copolymer and not less than 60% of a thermoplastic synthetic resin in an oriented state.

### Object and Summary of the Invention

Therefore, it is an object of the present invention to increase the plasticity of EVOH and to correspondingly provide a highly orientable heat-shrinkable film with low oxygen permeability, even at higher relative humidities.

The present invention provides an oriented plastic film with low oxygen permeability, said film comprising:
at least one oxygen barrier layer formed of a blended resin of
a terpolymer of ethylene, an acrylic ester, and a third comonomer selected from the group consisting of maleic anhydride and glycidyl methacrylate; and
ethylene vinyl alcohol.

In another aspect the invention provides the use of a terpolymer of ethylene, an acrylic ester, and a third comonomer selected from the group consisting of maleic anhydride and glycidyl methacrylate to increase the plasticity and orientability of ethylene vinyl alcohol polymer without sacrificing oxygen barrier characteristics in a blend comprising ethylene vinyl alcohol and a functionally effective amount of terpolymer.

In yet another aspect the invention is a method of producing a highly oriented heat-shrinkable multilayer film with low oxygen permeability, the method comprising:
blending an ethylene vinyl alcohol resin with a terpolymer of ethylene, an acrylic ester, and a third comonomer selected from the group consisting of maleic anhydride and glycidyl methacrylate; and thereafter
incorporating the resulting blended resin as a layer in a multilayer plastic film, and orienting the film.

In still another aspect the invention is a method of packaging food products sensitive to exposure to oxygen to protect the product against oxygen which method comprises:
wrapping the food product in a highly oriented heat-shrinkable multilayer film with low oxygen permeability in which at least one of the layers comprises one oxygen barrier layer formed of a blended resin of ethylene vinyl alcohol and a terpolymer of ethylene, an acrylic ester, and a third comonomer selected from the group consisting of maleic anhydride and glycidyl methacrylate; and
heat shrinking the multilayer film around the food product.

The foregoing and other advantages of the invention will be more clearly illustrated when taken in conjunction with the detailed description and the accompanying drawings in which:

### Description of the Drawings

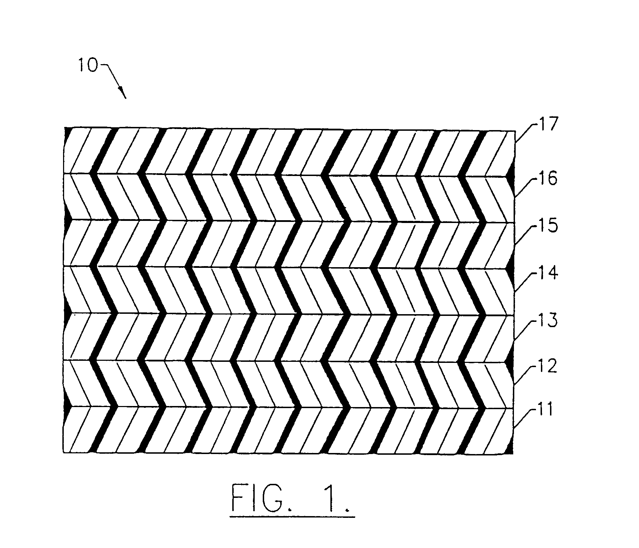

Figure 1 is a cross-sectional view of a multi-layer film according to the present invention.

### Detailed Description

The invention is an oriented-preferably heat-shrinkable, film with low oxygen permeability. The film comprises at least one barrier layer formed of a blended resin of ethylene vinyl alcohol and a terpolymer of ethylene, an acrylic ester, and a third comonomer selected from the group consisting of maleic anhydride (MAH) and glycidyl methacrylate (GMA).

Ethylene vinyl alcohol (EVOH) is used herein to describe a polymer formed of ethylene and hydroxyl (CH) functional groups. EVOH materials are often characterized by their percentage content of ethylene molecules, also referred to as the ethylene mole fraction. EVOH is commercially available with ethylene mole fractions of 27% to 48%. In the preferred embodiment of the invention, the ethylene mole fraction of the EVOH layer is between 30% and 50% of the EVOH polymer, and in the most preferred embodiments, the ethylene fraction is about 44%. Generally speaking, a higher ethylene mole fraction gives better orientation, while a lower ethylene mole fraction offers better oxygen barrier characteristics. Thus, the selection is often made for the particular combination of properties desired in a manner well understood by those familiar with these materials and of skill in this art.

Suitable EVOH resins are available from Evalca, 1001 Warrensville Road, Suite 201, Lisle, Illinois, 60632; and from Morton International, 1275 Lake Avenue, Woodstock, Illinois, 60098.

As used herein, the terpolymers have the structures illustrated below:

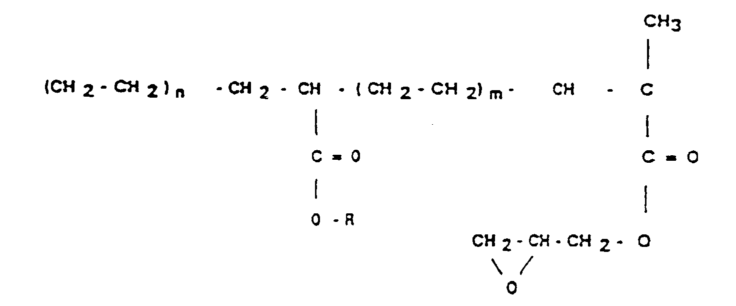

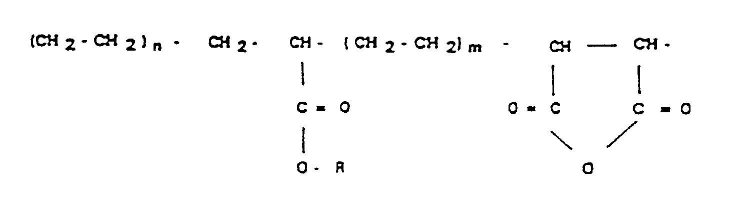

As seen from these formulas, the terpolymers (in which "m" and "n" designate integers normally greater than 1) include combinations of ethylene functional groups, acrylic esters (in which "R" designates an appropriate aliphatic or aromatic group that is otherwise compatible with the terpolymer and the film properties), and either maleic anhydride (2,5-furandione; C₄H₂O₃), or glycidyl methacrylate (glycidyl methacrylate: H₂C=C(CH₃)COOCH₂CHCH₂O). In such terpolymers, the acrylic esters offer thermal stability, flexibility, polarity and wettability. The maleic anhydride or glycidyl methacrylate offers chemical reactivity, adhesion to polar substrates, and compatibility with other polymers.

These terpolymers also have a lower T_{g} than EVOH, have little or no negative impact on EVOH's barrier properties when blended according to the invention, have little or no impact on optical quality of the resulting films, and have a good viscosity match with EVOH (for extrusion purposes). In preferred embodiments of the invention, the maleic anhydride terpolymer is more frequently incorporated. These terpolymer resins are commercially available from Elf Atochem North America, Inc., Three Parkway, Philadelphia, P.A., 19102 under the designation "Lotader."

Figure 1 illustrates a cross-sectional view of a multi-layer film according to the present invention. It will be understood that this particular structure is illustrative of typical multi-layer films, but that the invention is not limited to this particular type of structure.

In Figure 1, the film is broadly designated **10** and is formed of a sealant layer **11**, a core layer **12**, and a first tie (i.e. adhesive) layer **13**. These three layers taken together are often referred to as a substrate, because in some processing techniques, it is preferable to treat the substrate in manners that are advantageous to its components prior to adding any further layers for which such treatments would be disadvantageous. Alternatively, the entire illustrated structure can be coextruded and treated.

A variety of materials are useful for the various layers that compliment the oxygen barrier layer of the present invention. The sealant layer, for example, can be selected from the group consisting of very low density polyethylene (VLDPE), linear low density polyethylene (LLDPE), ethylene vinyl acetate (EVA), and combinations thereof. The core layer 12 can be selected from the grcup consisting of EVA, LLDPE, and combinations thereof. With respect to polyethylene, terms such as "low density," "very low density," "high density" and "linear" are used in a manner typical of this art. Such terms are broadly defined in, for example, Lewis', Hawleys Condensed Chemical Dictionary, Twelfth Edition (1993). As can be seen therein, these definitions are generally descriptive, and their use in the present specification and claims is such a descriptive use, rather than a limiting one.

The first or substrate tie layer 12, the second tie layer 14, and the third tie layer 16 can all be selected from appropriate adhesive-type polymers, including, for example, the group consisting of ethylene vinyl acetate, blends of linear low density polyethylene and maleic anhydride, and blends of acrylic esters and maleic anhydride, among others.

The skin layer 17 can be selected from the group consisting of blends of ethylene vinyl acetate and high density polyethylene (HDPE), polypropylene homopoylymers, copolymers or terpolymers, and blends of linear low density polyethylene and preferably metallocene polyolefins.

As used herein, the designation metallocene polyolefins refers to a group of olefin polymers that are produced using metallocene catalysts. Metallocene olefin polymers are characterized by narrower or more homogenous compositional properties such as molecular weight distribution than are polymer resins produced by more conventional Ziegler-Natta catalyst systems. Conventional Ziegler-Natta catalyst polymerization systems have discrete composition differences which are manifested as different catalyst reaction sites. Each such site has a different reaction rate and selectivity. In contrast, metallocene catalyst systems are characterized by a single identifiable chemical type which has a singular rate and selectivity. Thus, conventional Ziegler-Natta catalyst systems produce resins that reflect the differential character of the different catalyst sites. Alternatively and advantageously, metallocene catalyst systems produce polymer resins that reflect a single type of catalytic site. It will be noted by those familiar with polymer resins, however, that at least some previously available ethylene-based linear polymers approximated the physical and compositional properties achieved by the metallocene catalyst polyolefins. Stated differently, traditional Ziegler-Natta catalyzed polymerization processes operating at low reaction rates can produce relatively homogeneous resins that compare favorably with the homogeneity of metallocene catalyzed resins. Exemplary Ziegler-Natta catalyzed polyolefin resins are sold under the trade name Tafmer® by Mitsui Petrochemicals Americas, Ltd., 250 Park Avenue, Suite 950, New York, N.Y., 10177. Exemplary metallocene-catalyzed polyolefin resins are sold under the trade name Exact® by Exxon Chemicals Company, P.O. Box 3272, Houston, Texas 77253.

Accordingly, although illustrated as a complete structure, Figure 1 can also illustrate a substrate and a coating on the substrate. The substrate comprises the sealant layer **11**, the core layer **12**, and the first tie layer **13**. The coating comprises of another tie layer **14**, and oxygen barrier layer **15**, another tie layer **16**, and the skin layer **17**.

In preferred embodiments, the barrier layer **15** is formed of a blended resin in which the ethylene vinyl alcohol--preferably 44% mole fraction ethylene--makes up between about 85% and 90% by weight and the ethylene, acrylic ester, and maleic anhydride terpolymer makes up between about 10% and 15% by weight.

In a presently preferred embodiment that is exemplary of commercial food wraps, the invention is incorporated in a film of 590 µm (24 mils) thickness. In this structure, the sealant layer (11) is 73.5 µm (3.0 mils) thick, the core is 220.5 µm (9.0 mils), each tie layer is 29.4 µm (1.2 mils), the blend is 58.8 µm (2.4 mils), and the skin layer is 152 µm (6.0 mils) thick.

One of the advantages of the barrier layer of the present invention is its ability to be bi-axially oriented at relatively high ratios. As noted above, films according to the present invention have a typical commercial thickness of about 690 µm (24 mils; 1 mil equals 0.001 inch). Using the present invention, such films can have bi-axial orientation ratios of at least 10 to 1 and to date have been oriented at ratios of as high as almost 15 to 1. In turn, such films have been demonstrated to have normalized oxygen transmission rates (OTR's) at 0% relative humidity (RH) of between 50.8 and 304 cm² -µm/day/m²-atm (2 and 12 cm³-mil/day/m²-atm) at room temperatyre and an OTR at 100% RH of between 482 and 1066 cm²-µm/day/m²-atm (19 and 42 cm³-mil/day/m²-atm) at room temperature.

A summary of some of these various properties are included in the two following tables. Table 1 shows the orientation properties and Table 2 illustrates the barrier properties of various samples of the present invention.

**TABLE 1:**

| ORIENTATION PROPERTIES | | | |
|---|---|---|---|
| Sample | Variable¹ | Orientation MD x TD | Orientation Total |
| Control Control | 100/0 100/0 | Less than 3.0 x 2.5 | Less Than 7.5 |
| 3525 | 85/15 3200 | 3.3 x 3.2 | 10.6 |
| 3697 (#12) | 80/20 3200 | 3.2 x 3.72 | 11.9 |
| 3698 (#13) | 85/15 3700 | 2.78 x 3.72 | 10.3 |
| 3699 (#14) | 85/15 3410 | 3.2 x 3.72 | 11.9 |
| 3700 (#15) | 85/15 3200 | 3.20 x 3.72 | 11.9 |
| 3701 (#16) | 90/10 3200 | 2.76 x 3.72 | 10.3 |
| 3702 (#17) | 90/10 3200 | N/A | N/A |
| 3703 (#21) | 85/15 3410 | 3.20 x 3.72 | 11.9 |
| 3748 (A-2) | 85/15 3410 | 3.20 x 3.72 | 11.9 |
| 3760 (#9) | 85/15 3410 | 3.20 x 3.72 | 11.9 |
| 3761 (#10) | 85/15 3410 | 3.20 x 3.72 | 11.9 |

| | | | |
|---|---|---|---|
| ¹Weight Percent of EVOH/Terpolymer; Elf Atochem Product No. | | | |

In all cases EVOH is Eval E105 and Terpolymer is a Lotader product having the number indicated; the terpolymers are all maleic anhydride terpolymers.

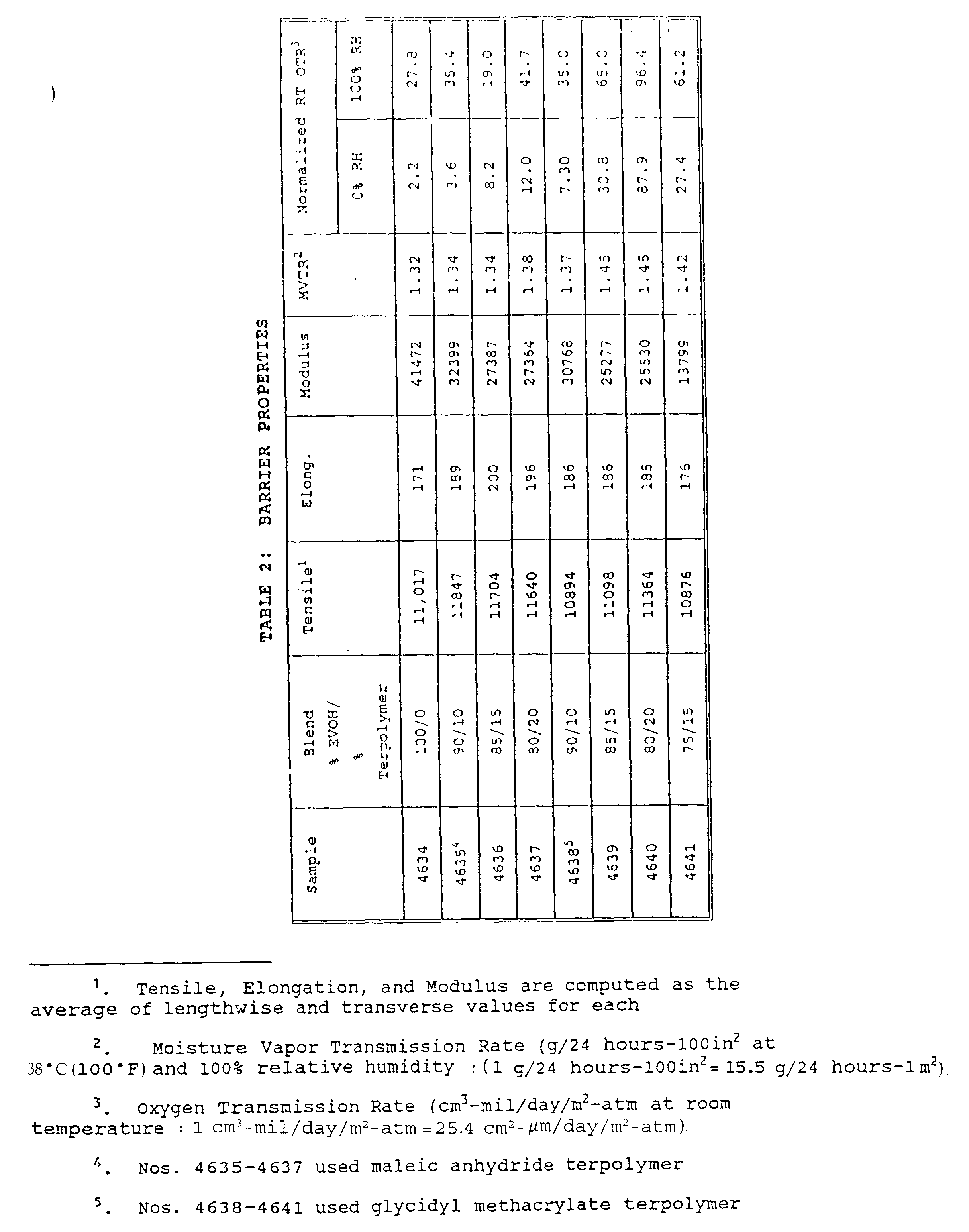

The invention further comprises the method of producing a highly oriented heat-shrinkable multi-layer film with low oxygen permeability. The method comprises blending an ethylene vinyl alcohol resin with a terpolymer of ethylene, and acrylic ester, and a third comonomer selected from the group consisting of maleic anhydride and glycidyl methacrylate. Thereafter, the resulting blended resin is incorporated as a layer in a multi-layer plastic film.

As mentioned earlier, and in accordance with conventional techniques, the step of incorporating the blended resin can comprise applying the blended resin as a coating onto the tie layer of a substrate formed of a sealant layer, a core layer on the sealant layer, and the tie layer on the core layer. Typically, the substrate is coextruded as the sealant, core and tie layers prior to the step of applying the blended resin to the substrate. As illustrated in Figure 1, the method can further comprise the step of applying the second tie layer **14** to the substrate tie layer **13** prior to the step of applying the blended resin.

The method can then further comprise the steps of applying the third tie layer **16** to the blended resin layer **15** after the blended resin layer **15** has been applied to the substrate and thereafter coating the third tie layer 16 with the skin layer **17**.

As is known to those familiar with the manufacture of such films, the substrate can be beneficially irradiated to enhance its properties, typically crosslinking, prior to the step of applying the coating layers to it.

Alternatively, the entire multi-layer film such as illustrated in Figure 1 can be coextruded to form the entire structure in one step and then irradiated.

The method of forming the film can then further comprise the step of bi-axially orienting the multi-layer plastic film. As known to those familiar with such techniques, a typical orientation would include maintaining the film at a temperature of between 71 and 98°C (160 and 210° F), preferably 74 and 98°C (165 and 210°F), while expanding the film in both the machine and transverse directions, and thereafter cooling the film to about 7°C (45°F) while maintaining the film in the expanded condition to maintain its orientation.

Other than the composition of the film, the extrusion, irradiation and coating steps (or the coextrusion steps) are conventional to those of ordinary skill in this art, as is the equipment used, and will not otherwise be described in detail herein. As a brief summary, however, the core and sealant layers that form the substrate are extruded at appropriate temperatures; e.g. approximately 177-204°C (350-400°F) for the composite films of the present invention. The substrate is quenched at about 10°C (50°F) and then irradiated. The coating layers are then applied by extrusion, at temperatures of 166-221°C (330-430°F), and again quenched to about 10°C (50°F). The product is a flattened tube of composite film that is referred to as the tape. The tape is then heated in a water bath to a temperature of between 74 and 98°C (165° and 210°F), nipped (on rolls), and directed through an air ring. The air ring inflates the tape, while a terminal set of nip rolls draw it at a higher rate than it is initially fed. As a result, the air ring helps expand the tape in the transverse direction into a tube while the terminal nip rolls expand it in the machine direction. The terminal nip rolls also re-flatten the tubing, after which it is wound for use or other processing.

The film of the invention can then be used in an appropriate method of wrapping a food product in the highly oriented heat-shrinkable multi-layer film, and then heat-shrinking the multi-layer film around the food product to complete the package.

As is further known to those familiar with this type of packaging, the heat-shrinking step typically comprises immersing the wrapped food product in a shrink tunnel having a temperature of between 71 and 98°C (160° and 210°F)-- i.e., corresponding to the orientation temperature-- for a time period sufficient for the oriented film to shrink to a substantially unoriented condition, while brief enough to prevent the shrink tunnel from affecting the properties of the food product.

In another aspect, the invention comprises use of a terpolymer of ethylene, an acrylic ester, and a third comonomer selected from the group consisting of maleic anhydride and glycidyl methacrylate to increase the plasticity and orientability of ethylene vinyl alcohol, for a variety of purposes. In the preferred embodiment, the terpolymer includes maleic anhydride, and is blended in an amount of between 10% and 25% with the ethylene vinyl alcohol.

Although 44% EVOH has been used in the preferred embodiments herein, the invention should also help improve the orientability of the lower ethylene mole fraction grades of EVOH (i.e., those grades that are less plastic, but better O₂ barriers) in any areas where plastization is required, including injection molding, thermoforming, or other finishing processes. Similarly, the invention should offer increased plasticity and related advantages in any process where glass transition temperature is a limiting factor.

In the drawings and specification, there have been disclosed typical preferred embodiments of the invention and, although specific terms have been employed, they have been used in a generic and descriptive sense only, and not for purposes of limitation, the scope of the invention being set forth in the following claims.

## Claims

1. An oriented plastic film with low oxygen permeability, said film comprising:
at least one oxygen barrier layer formed of a blended resin of
a terpolymer of ethylene, an acrylic ester, and a third comonomer selected from the group consisting of maleic anhydride and glycidyl methacrylate; and
ethylene vinyl alcohol.

2. A film according to claim 1 which is heat-shrinkable.

3. A film according to claim 1 or 2 wherein the weight percentage of ethylene vinyl alcohol in said blended resin is greater than 50 percent.

4. A film according to claim 3 wherein the weight percentage of ethylene vinyl alcohol in said blended resin is from 85 to 90 percent.

5. A film according to claim 3 or 4 wherein the ethylene content of said ethylene vinyl alcohol is between 30 and 50 mole percent.

6. A film according to claim 5 wherein the ethylene content of said ethylene vinyl alcohol is about 44 mole percent.

7. A film according to any one of the preceding claims which is a multilayer film.

8. A film according to claim 7 wherein said multilayer film comprises a substrate portion and a coating portion.

9. A film according to claim 8 wherein said substrate portion comprises a plurality of individual layers and said coating portion comprises a plurality of individual layers.

10. A film according to claim 9 wherein said substrate comprises a sealant layer, a core layer and a substrate tie layer; and
said coating comprises a second tie layer, an oxygen barrier layer, a third tie layer, and a skin layer.

11. A multilayer film according to claim 10 wherein said sealant layer is selected from the group consisting of: very low density polyethylene, linear low density polyethylene, ethylene vinyl acetate, and combinations thereof.

12. A multilayer film according to claim 10 or 11 wherein said core layer is selected from the group consisting of: ethylene vinyl acetate, linear low density polyethylene, and combinations thereof.

13. A multilayer film according to claim 10, 11 or 12 wherein said tie layers are selected from the group consisting of: ethylene vinyl acetate, blends of linear low density polyethylene and maleic anhydride, and blends of acrylic esters and maleic anhydride.

14. A multilayer film according to any one of claims 10 to 13 wherein said skin layer is selected from the group consisting of: blends of ethylene vinyl acetate and high density polyethylene, polypropylene monopolymers, copolymers, or terpolymers; and blends of linear low density polyethylene and metallocene polyolefins.

15. A film according to any one of the preceding claims having a biaxial orientation ratio of at least 10:1 when 0.61 mm (24 mil) thick.

16. A film according to claim 15 that has a biaxial orientation ratio of from 10:1 to 15:1.

17. A film according to any one of the preceding claims wherein said third comonomer comprises glycidyl methacrylate, and wherein said film has a normalized oxygen transmission rate (OTR) of from 177 to 2286 cm³-µm/day/m²-atm (7 to 90 cm³-mil/day/m²-atm) at room temperature and an OTR at 100% RH of from 889 to 2540 cm³-µm/day/m²-atm (35 to 100 cm³-mil/day/m²-atm) at room temperature.

18. A film according to any one of claims 1 to 16 wherein said third ccmonomer is maleic anhydride and wherein said film has a normalized oxygen transmission rate (OTR) at 0% relative humidity (RH) of from 50.8 to 304 cm³-µm/day/m²-atm (2 to 12 cm³-mil/day/m²-atm) at room temperature, and an OTR at 100% RH of from 482 to 1066 cm³-µm/day/m²-atm (19 to 42 cm³-mil/day/m²-atm) at room temperature.

19. Use of a terpolymer of ethylene, an acrylic ester, and a third comonomer selected from the group consisting of maleic anhydride and glycidyl methacrylate to increase the plasticity and orientability of ethylene vinyl alcohol polymer without sacrificing oxygen barrier characteristics in a blend comprising ethylene vinyl alcohol and a functionally effective amount of terpolymer.

20. Use according to claim 19 in which the blend comprises from 10 to 25% by weight of terpolymer and 90 to 75% by weight ethylene vinyl alcohol.

21. A method of producing a highly oriented heat-shrinkable multilayer film with low oxygen permeability, the method comprising:
blending an ethylene vinyl alcohol resin with a terpolymer of ethylene, an acrylic ester, and a third comonomer selected from the group consisting of maleic anhydride and glycidyl methacrylate; and thereafter
incorporating the resulting blended resin as a layer in a multilayer plastic film, and orienting the film.

22. A method according to claim 21 wherein the step of incorporating the blended resin comprises irradiating a coextruded substrate formed of a sealant layer, a core layer upon the sealant layer, and a tie layer on the core layer, and subsequently applying the blended resin as a coating onto the tie layer of the substrate.

23. A method according to claim 21 wherein the step of incorporating the blended resin comprises coextruding a multilayer film structure that includes a layer formed of the blended resin.

24. A method of packaging a food product sensitive to exposure to oxygen to protect the product against oxygen which method comprises:
wrapping the food product in a highly oriented heat-shrinkable multilayer film with low oxygen permeability in which at least one of the layers comprises one oxygen barrier layer formed of a blended resin of ethylene vinyl alcohol and a terpolymer of ethylene, an acrylic ester, and a third comonomer selected from the group consisting of maleic anhydride and glycidyl methacrylate; and
heat shrinking the multilayer film around the food product.

25. A method according to claim 24 wherein the step of heat shrinking the multilayer film comprises immersing the wrapped food product in a shrink tunnel having a temperature from 71 to 98°C (160°F to 210°F) for a time period sufficient for the oriented film to shrink to a substantially unoriented condition without affecting the properties of the food product.

## Patentansprüche

1. Orientierte Kunststoffolie mit geringer Sauerstoffdurchlässigkeit, wobei die Folie umfaßt:
mindestens eine Sauerstoffsperrschicht, die aus einem gemischten Harz aus
einem Terpolymer von Ethylen, Acrylester und einem dritten Comonomer ausgewählt aus der Gruppe bestehend aus Maleinsäureanhydrid und Glycidylmethacrylat und
Ethylenvinylalkohol gebildet worden ist.

2. Folie nach Anspruch 1, die wärmeschrumpfbar ist.

3. Folie nach Anspruch 1 oder 2, bei der der Gewichtsprozentsatz von Ethylenvinylalkohol in dem gemischten Harz größer als 50 % ist.

4. Folie nach Anspruch 3, bei der der Gewichtsprozentsatz von Ethylenvinylalkohol in dem gemischten Harz 85 bis 90 % beträgt.

5. Folie nach Anspruch 3 oder 4, bei der der Ethylengehalt des Ethylenvinylalkohols 30 bis 50 Mol-% beträgt.

6. Folie nach Anspruch 5, bei der der Ethylengehalt des Ethylenvinylalkohols etwa 44 Mol-% beträgt.

7. Folie nach einem der vorhergehenden Ansprüche, die eine Mehrschichtfolie ist.

8. Folie nach Anspruch 7, bei der die Mehrschichtfolie einen Substratteil und einen Beschichtungsteil umfaßt.

9. Folie nach Anspruch 8, bei der der Substratteil eine Vielzahl von individuellen Schichten umfaßt und der Beschichtungsteil eine Vielzahl von individuellen Schichten umfaßt.

10. Folie nach Anspruch 9, bei der das Substrat eine Siegelschicht, eine Kernschicht und eine Substratverbindungsschicht umfaßt; und
die Beschichtung eine zweite Verbindungsschicht, eine Sauerstoffsperrschicht, eine dritte Verbindungsschicht und eine Hautschicht umfaßt.

11. Mehrschichtfolie nach Anspruch 10, bei der die Siegelschicht ausgewählt ist aus der Gruppe bestehend aus: Polyethylen sehr niederer Dichte, linearem Polyethylen niederer Dichte, Ethylen/Vinylacetat und Kombinationen derselben.

12. Mehrschichtfolie nach Anspruch 10 oder 11, bei der die Kernschicht ausgewählt ist aus der Gruppe bestehend aus: Ethylen/Vinylacetat, linearem Polyethylen niederer Dichte und Kombinationen derselben.

13. Mehrschichtfolie nach Anspruch 10, 11 oder 12, bei der die Verbindungsschichten ausgewählt sind aus der Gruppe bestehend aus: Ethylen/Vinylacetat, Mischungen von linearem Polyethylen niederer Dichte und Maleinsäureanhydrid und Mischungen von Acrylestern und Maleinsäureanhydrid.

14. Mehrschichtfolie nach einem der Ansprüche 10 bis 13, bei der die Hautschicht ausgewählt ist aus der Gruppe bestehend aus: Mischungen von Ethylen/Vinylacetat und Polyethylen hoher Dichte, Polypropylenmonopolymeren, -copolymeren oder -terpolymeren und Mischungen von linearem Polyethylen niederer Dichte und Metallocenpolyolefinen.

15. Folie nach einem der vorhergehenden Ansprüche, die ein biaxiales Orientationsverhältnis von mindestens 10 : 1 aufweist, wenn sie 0,61 mm (24 mil) dick ist.

16. Folie nach Anspruch 15, die ein biaxiales Orientationsverhältnis von 10 : 1 bis 15 : 1 aufweist.

17. Folie nach einem der vorhergehenden Ansprüche, bei der das dritte Comonomer Glycidylmethacrylat umfaßt und die Folie eine normalisierte Sauerstofftransmissionsrate (OTR) von 177 bis 2286 cm³-µm/Tag/m²-atm (7 bis 90 cm³-mil/Tag/m²-atm) bei Raumtemperatur und eine OTR bei 100 % relativer Feuchte von 889 bis 2540 cm³-µm/Tag/m²-atm (35 bis 100 cm³-mil/Tag/m²-atm) bei Raumtemperatur aufweist.

18. Folie nach einem der Ansprüche 1 bis 16, bei der das dritte Comonomer Maleinsäureanhydrid ist und die Folie eine normalisierte Sauerstofftransmissionsrate (OTR) bei 0 % relativer Feuchtigkeit (RH) von 50,8 bis 304 cm³-µm/Tag/m²-atm (2 bis 12 cm³-mil/Tag/m²-atm) bei Raumtemperatur und eine OTR bei 100 % relativer Feuchtigkeit von 482 bis 1066 cm³-µm/Tag/m²-atm (19 bis 42 cm³-mil/Tag/m²-atm) bei Raumtemperatur aufweist.

19. Verwendung eines Terpolymers aus Ethylen, Acrylester und einem dritten Comonomer ausgewählt aus der Gruppe bestehend aus Maleinsäureanhydrid und Glycidylmethacrylat zur Erhöhung der Plastizität und Orientierbarkeit von Ethylen/Vinylalkohol-Polymer ohne Verschlechterung der Sauerstoffsperreigenschaften in einer Mischung, die Ethylen/Vinylalkohol und eine funktionell wirksame Menge Terpolymer umfaßt.

20. Verwendung nach Anspruch 19, bei der die Mischung 10 bis 25 Gew.-% Terpolymer und 90 bis 75 Gew.-% Ethylen/Vinylalkohol umfaßt.

21. Verfahren zur Herstellung einer hochorientierten, wärmeschrumpfbaren Mehrschichtfolie mit geringer Sauerstoffdurchlässigkeit, bei dem:
Ethylen/Vinylalkohol-Harz mit einem Terpolymer aus Ethylen, Acrylester und einem dritten Comonomer ausgewählt aus der Gruppe bestehend aus Maleinsäureanhydrid und Glycidylmethacrylat gemischt wird, anschließend
das resultierende gemischte Harz als Schicht in eine Mehrschichtkunststoffolie eingeführt wird, und die Folie orientiert wird.

22. Verfahren nach Anspruch 21, bei dem die Stufe der Einführung des gemischten Kunststoffharzes die Bestrahlung eines koextrudierten Substrats, das aus einer Siegelschicht, einer Kernschicht auf der Siegelschicht und einer Verbindungsschicht auf der Kernschicht gebildet worden ist, und die anschließende Aufbringung des gemischten Harzes als Beschichtung auf die Verbindungsschicht des Substrats umfaßt.

23. Verfahren nach Anspruch 21, bei dem die Stufe der Einführung des gemischten Harzes die Koextrudierung einer Mehrschichtfolienstruktur umfaßt, die eine Schicht enthält, die aus dem gemischten Harz gebildet worden ist.

24. Verfahren zur Verpackung eines Lebensmittelprodukts, das gegenüber der Einwirkung von Sauerstoff empfindlich ist, um das Produkt gegen Sauerstoff zu schützen, wobei das Verfahren umfaßt:
das Einwickeln des Lebensmittelprodukts in eine hochorientierte, wärmeschrumpfbare Mehrschichtfolie mit niedriger Sauerstoffdurchlässigkeit, bei der mindestens eine der Schichten eine Sauerstoffsperrschicht umfaßt, die aus einem gemischten Harz aus Ethylen/Vinylalkohol und einem Terpolymer aus Ethylen, Acrylester und einem dritten Comonomer gebildet ist, wobei das dritte Comonomer ausgewählt ist aus der Gruppe bestehend aus Maleinsäureanhydrid und Glycidylmethacrylat, und
die wärmeschrumpfung der Mehrschichtfolie um das Lebensmittelprodukt herum.

25. Verfahren nach Anspruch 24, bei dem die Stufe der Wärmeschrumpfung der Mehrschichtfolie das Einbringen des umwickelten Lebensmittelprodukts in einen Schrumpftunnel mit einer Temperatur von 71 bis 98 °C (160 °F bis 210 °F) für einen Zeitraum umfaßt, der ausreicht, daß die orientierte Folie in einen im wesentlichen unorientierten Zustand schrumpft, ohne die Eigenschaften des Lebensmittelprodukts zu beeinträchtigen.

## Revendications

1. Film plastique orienté avec une faible perméabilité à l'oxygène, ledit film comprenant :
au moins une couche barrière à l'oxygène formée d'une résine mélangée
d'un terpolymère d'éthylène, d'un ester acrylique et d'un troisième comonomère choisi parmi le groupe comprenant l'anhydride maléïque et le glycidyl méthacrylate; et
d'éthylène vinyl alcool.

2. Film selon la revendication 1, qui est rétractable à la chaleur.

3. Film selon la revendication 1 ou 2, dans lequel le pourcentage en poids d'éthylène vinyl alcool dans ladite résine mélangée est plus grand que 50 pour cent.

4. Film selon la revendication 3, dans lequel le pourcentage en poids d'éthylène vinyl alcool dans ladite résine mélangée est de 85 à 90 pour cent.

5. Film selon la revendication 3 ou 4, dans lequel la teneur en éthylène dudit éthylène vinyl alcool est entre 30 et 50 moles pour cent.

6. Film selon la revendication 5, dans lequel la teneur en éthylène dudit éthylène vinyl alcool est d'environ 44 moles pour cent.

7. Film selon l'une quelconque des revendications précédentes, qui est un film multicouches.

8. Film selon la revendication 7, dans lequel ledit film multicouches comprend une partie de substrat et une partie de revêtement.

9. Film selon la revendication 8, dans lequel ladite partie de substrat comprend une pluralité de couches individuelles et ladite partie de revêtement comprend une pluralité de couches individuelles.

10. Film selon la revendication 9, dans lequel ledit substrat comprend une couche de scellement, une couche d'âme et une couche de liaison de substrat; et
ledit revêtement comprend une deuxième couche de liaison, une couche barrière à l'oxygène, une troisième couche de liaison et une couche de peau.

11. Film multicouches selon la revendication 10, dans lequel ladite couche de scellement est choisie dans le groupe comprenant :
le polyéthylène très faible densité, le polyéthylène linéaire faible densité, l'éthylène vinyl acétate (EVA), et des combinaisons de ceux-ci.

12. Film multicouches selon la revendication 10 ou 11, dans lequel ladite couche d'âme est choisie dans le groupe comprenant : l'éthylène vinyl acétate, le polyéthylène linéaire faible densité et leurs combinaisons.

13. Film multicouches selon la revendication 10, 11 ou 12, dans lequel lesdites couches de liaison sont choisies dans le groupe comprenant l'éthylène vinyl acétate, des mélanges de polyéthylène linéaire faible densité et d'anhydride maléïque, et des mélanges d'esters acryliques et d'anhydride.

14. Film multicouches selon l'une quelconque des revendication 10 à 13, dans lequel ladite couche de peau est choisie dans le groupe comprenant : des mélanges d'éthylène vinyl acétate et de polyéthylène haute densité, des monopolymères, copolymères, ou terpolymères de polypropylène; et des mélanges de polyéthylène linéaire faible densité et de polyoléfines métallocène.

15. Film selon l'une quelconque des revendication précédentes, possédant un rapport d'orientation biaxiale d'au moins 10:1 lorsque son épaisseur est de 0,61 mm (24 mils).

16. Film selon la revendication 15, qui a un rapport d'orientation biaxiale de 10:1 à 15:1.

17. Film selon l'une quelconque des revendications précédentes, dans lequel ledit troisième comonomère comprend du glycidyl méthacrylate et qui possède une vitesse de transmission à l'oxygène normalisée (OTR) de 177 à 2286 cm³-µm/jour/m²-atm (7 à 90 cm³-mil/jour/m²-atm) à la température ambiante, et une OTR à 100 % de HR compris entre 898 et 2540 cm³-µm/jour/m²-atm (35 à 100 cm³-mil/jour/m²-atm) à la température ambiante.

18. Film selon l'une quelconque des revendications 1 à 16, dans lequel ledit troisième comonomère est l'anhydride maléique et qui possède une vitesse de transmission à l'oxygène normalisée (OTR) à 0 % d'humidité relative (HR) de 50,8 à 304 cm³-µm/jour/m²-atm (2 à 12 cm³-mil/jour/m²-atm) à la température ambiante, et une OTR à 100 % de HR compris entre 482 et 1666 cm³-µm/jour/m²-atm (19 à 42 cm³-mil/jour/m²-atm) à la température ambiante.

19. Utilisation d'un terpolymère d'éthylène, d'un ester acrylique et d'un troisième comonomère choisi dans le groupe comprenant l'anhydride maléique et le glycidyl méthacrylate pour augmenter la plasticité et la capacité d'orientation du polymère d'éthylène vinyl alcool sans sacrifier les caractéristiques barrière à l'oxygène dans un mélange comprenant de l'éthylène vinyl alcool et une quantité fonctionnellement efficace de terpolymère.

20. Utilisation selon la revendication 19, dans laquelle le mélange comprend de 10 à 25 % en poids de terpolymère et de 90 à 75 pour cent en poids d'éthylène vinyl alcool.

21. Procédé de production d'un film multicouches rétractable à la chaleur et hautement orienté avec une faible perméabilité à l'oxygène, ce procédé consistant à : mélanger une résine d'éthylène vinyl alcool avec un terpolymère d'éthylène, d'un ester acrylique, et d'un troisième comonomère choisi dans le groupe comprenant l'anhydride maléïque et le glycidyl méthacrylate; et, ensuite,
on incorpore la résine mélangée résultante sous la forme d'une couche dans un film plastique multicouches, et on oriente le film.

22. Procédé selon la revendication 21, dans lequel l'étape d'incorporation de la résine mélangée consiste à irradier un substrat coextrudé formé d'une couche de scellement, d'une couche d'âme sur la couche de scellement, et d'une couche de liaison sur la couche d'âme, et on applique ensuite la résine mélangée sous la forme d'un revêtement sur la couche de liaison du substrat.

23. Procédé selon la revendication 21, dans lequel l'étape d'incorporation de la résine mélangée consiste à coextruder une structure de film multicouches qui comporte une couche formée de la résine mélangée.

24. Procédé d'emballage d'un produit alimentaire sensible à l'exposition à l'oxygène pour protéger le produit contre l'oxygène, lequel procédé consiste à : emballer le produit alimentaire dans un film multicouches rétractable à la chaleur et hautement orienté, avec une faible perméabilité à l'oxygène, et dans lequel au moins une des couches comprend une couche barrière à l'oxygène formée d'une résine mélangée d'éthylène vinyl alcool et d'un terpolymère d'éthylène, d'un ester acrylique, et d'un troisième comonomère choisi dans le groupe comprenant l'anhydride maléïque et le glycidyl méthacrylate; et à rétracter à la chaleur le film multicouches autour du produit alimentaire.

25. Procédé selon la revendication 24, selon lequel l'étape de rétrécissement à la chaleur du film multicouches consiste à immerger le produit alimentaire emballé dans un tunnel de rétrécissement possédant une température de 71 à 98°C (160° à 210°F) pendant une période de temps suffisante pour que le film orienté se rétrécisse jusqu'à un état sensiblement non orienté, sans affecter les propriétés du produit alimentaire.
